(19) Europäisches Patentamt / European Patent Office / Office européen des brevets

(11) EP 4 566 836 A1

(12) EUROPEAN PATENT APPLICATION

(43) Date of publication:
**11.06.2025 Bulletin 2025/24**

(21) Application number: **24211539.2**

(22) Date of filing: **07.11.2024**

(51) International Patent Classification (IPC):
***B60C 1/00*** *(2006.01)* ***C08L 7/00*** *(2006.01)*
***C08L 9/06*** *(2006.01)*

(52) Cooperative Patent Classification (CPC):
(C-Sets available)
**C08L 7/00; B60C 1/0016; B60C 11/0306;**
**B60C 11/033; C08L 9/06;** B60C 2011/0355 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.12.2023 JP 2023207178**

(71) Applicant: **Sumitomo Rubber Industries, Ltd.**
**Kobe-shi, Hyogo 651-0072 (JP)**

(72) Inventor: **ONO, Shuichiro**
**Kobe-shi, 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) TIRE

(57) It is an object of the present invention to provide a tire having improved abrasion resistance. Provided is a tire comprising a tread, wherein a rubber composition constituting the tread comprises a rubber component comprising an isoprene-based rubber and a styrene-butadiene rubber, silica, and a coupling agent, wherein a tread surface of the tread comprises circumferential grooves extending continuously in a circumferential direction, and wherein $A_{IR}$, $A_{SBR}$, $A_{SIL}$, and D satisfy the following relationships,

$$(1)\ A_{SIL}/A_{SBR} > 1.00$$

$$(2)\ A_{IR}/D > 3.0$$

EP 4 566 836 A1

(52) Cooperative Patent Classification (CPC): (Cont.)

C-Sets
**C08L 7/00, C08L 9/06, C08K 3/36, C08K 5/544;**
**C08L 9/06, C08L 7/00, C08L 9/00, C08K 3/36,**
**C08K 5/544**

## Description

TECHNICAL FIELD

The present invention relates to a tire.

BACKGROUND OF THE INVENTION

One of important characteristics required for a tire is abrasion resistance. For example, JP 2013-053296 A describes a rubber composition for tire having improved abrasion resistance and the like by compounding predetermined silica and liquid resin.

SUMMARY OF THE INVENTION

However, abrasion resistance of a rubber composition for tire is further required to be improved from various perspectives.
It is an object of the present invention to provide a tire having improved abrasion resistance, particularly abrasion resistance on a rough road, in a case of use of a rubber composition that comprises a rubber component comprising an isoprene-based rubber and a styrene-butadiene rubber, silica, and a coupling agent.
The present invention relates to the following tire.
A tire comprising a tread,

wherein a rubber composition constituting the tread comprises a rubber component comprising an isoprene-based rubber and a styrene-butadiene rubber, silica, and a coupling agent,
wherein a tread surface of the tread comprises circumferential grooves extending continuously in a circumferential direction, and
wherein $A_{IR}$, $A_{SBR}$, $A_{SIL}$, and D satisfy the following relationships,

$$(1)\ A_{SIL}/A_{SBR} > 1.00$$

$$(2)\ A_{IR}/D > 3.0$$

where $A_{IR}$ represents a content, in parts by mass, of the isoprene-based rubber, $A_{SBR}$ represents a content, in parts by mass, of the styrene-butadiene rubber, $A_{SIL}$ represents a content, in parts by mass, of the silica, based on 100 parts by mass of the rubber component, and D represents a groove depth, in mm, of a deepest circumferential groove among the circumferential grooves.

According to the present invention, a tire can be provided which improves in abrasion resistance, particularly abrasion resistance on a rough road.

BRIEF DESCRIPTION OF THE DRAWINGS

FIG. 1 is a view schematically showing a part of a cross-sectional view of a tire relating to one embodiment of the present invention.
FIG. 2 is a view schematically showing a shape of a tread ground-contacting surface of a tire. A region surrounded in FIG. 2 represents the shape of the tread ground-contacting surface.
FIG. 3 is a view showing a tire cross-sectional width (Wt), a tire cross-sectional height (Ht), and a tire outer diameter (Dt).
FIG. 4 is a view schematically showing a tread pattern of a tire relating to one embodiment of the present invention.

DETAILED DESCRIPTION

The tire of the present invention is:

A tire comprising a tread,
wherein a rubber composition constituting the tread comprises a rubber component comprising an isoprene-based rubber and a styrene-butadiene rubber, silica, and a coupling agent,
wherein a tread surface of the tread comprises circumferential grooves extending continuously in a circumferential direction, and
wherein $A_{IR}$, $A_{SBR}$, $A_{SIL}$, and D satisfy the following relationships,

$$(1)\ A_{SIL}/A_{SBR} > 1.00$$

$$(2)\ A_{IR}/D > 3.0$$

where $A_{IR}$ represents a content, in parts by mass, of the isoprene-based rubber, $A_{SBR}$ represents a content, in parts by mass, of the styrene-butadiene rubber, $A_{SIL}$ represents a content, in parts by mass, of the silica, based on 100 parts by mass of the rubber component, and D represents a groove depth, in mm, of a deepest circumferential groove among the circumferential grooves.

Although it is not intended to be bound by theory, in the present invention, the following can be considered as a mechanism by which abrasion resistance, particularly abrasion resistance on a rough road, can be improved.
That is, it is considered that (1) a rubber component comprising an isoprene-based rubber (IR-based rubber) and a styrene-butadiene rubber (SBR) is used in the rubber composition for tread, whereby they become a phase-separated structure and it becomes easy to mitigate external force on its interface, (2) silica having an amount greater than an amount of an SBR is compounded, whereby a network of the silica is formed across each phase relating to phase separation and a reinforcing effect is enhanced, and (3) in addition to them, an increased amount of an IR-based rubber improves dispersion of silica and an shallowed groove depths of circumferential grooves on tread surface suppresses deformation of a tread rubber, whereby abrasion resistance is enhanced. Additionally, it is considered that, with cooperation of (1) to (3), abrasion resistance, particularly abrasion resistance on a rough road is improved synergistically.
The content $A_{SIL}$, in parts by mass, of the silica is preferably greater than 50 parts by mass and less than 200 parts by mass.
This is because it is considered that a network of the silica is easily formed. Moreover, this is because it is considered that silica can contribute to fuel efficiency.
It is preferable that the rubber composition comprises carbon black and $A_{CB}$ is greater than 2 parts by mass and less than 20 parts by mass when a content, in parts by mass, of the carbon black based on 100 parts by mass of the rubber component is referred to as $A_{CB}$.
This is because an amount of the carbon black as a filler is suppressed and an amount of the silica is increased, whereby it is considered that a network of the silica is easily formed. Moreover, this is because it is considered that silica can contribute to fuel efficiency.
It is preferable that the rubber composition comprises carbon black and the content $A_{SIL}$, in parts by mass, of the silica and $A_{CB}$ satisfy the following relationship when a content, in parts by mass, of the carbon black based on 100 parts by mass of the rubber component is referred to as $A_{CB}$,

$$(3)\ A_{CB}/\ A_{SIL} < 0.80.$$

This is because an amount of the carbon black as a filler is suppressed and an amount of the silica is increased, whereby it is considered that a network of the silica is easily formed. Moreover, this is because it is considered that silica can contribute to fuel efficiency.
An average primary particle size of the silica is preferably less than 19 nm.
This is because it is considered that a stronger network of the silica is formed.
When a land ratio, in %, of a tread ground-contacting surface of the tread is referred to as L, the content $A_{SIL}$, in parts by mass, of the silica and L preferably satisfy the following relationship,

$$(4)\ A_{SIL} \times L > 2500.$$

This is because, as the land ratio increases, a force per unit area of a rubber is suppressed, whereby an amount of deformation of the rubber is also suppressed, so that it is considered that a smaller amount of the silica is permissible.
When a thickness, in mm, of a rubber layer composed of the rubber composition constituting the tread is referred

to as H and a total styrene amount, in % by mass, in the rubber component is referred to as S, H and S preferably satisfy the following relationship,

$$(5)\ H \times S < 230.$$

This is because, as a thickness of the rubber layer constituting the tread becomes small, an amount of deformation of the rubber is also suppressed, so that it is considered that a smaller total styrene amount is permissible.
The coupling agent preferably comprises a coupling agent having a nitrogen atom-containing associative group.
The coupling agent having a nitrogen atom-containing associative group makes an acid-base interaction with acidic silica. Accordingly, even in a case where the tread rubber deforms largely, it becomes difficult to lose a reinforcing effect caused by the coupling agent and it is considered that abrasion resistance on a rough road is further improved.
A content of the coupling agent having a nitrogen atom-containing associative group is preferably greater than 6 parts by mass and less than 12 parts by mass based on 100 parts by mass of the silica.
This is because it is considered that an effect by the coupling having a nitrogen atom-containing associative group is easily exhibited in the present invention.
Wt and Dt preferably satisfy one of the following inequalities (A), (B), and (C),

$$Wt < 225 \text{ and } Dt \geq 59.078 \times Wt\text{^}0.460 \ \cdots\ (A)$$

$$225 \leq Wt < 235 \text{ and } Dt \geq 59.078 \times Wt\text{^}0.620-967.673 \ \cdots\ (B)$$

$$235 \leq Wt \text{ and } Dt \geq Wt\text{^}0.6+750 \ \cdots\ (C),$$

where Wt represents a tire cross-sectional width in mm, and Dt represents a tire outer diameter in mm when the tire is assembled to a rim and internal pressure is set to be 250 kPa or more.
This is because, since the tire satisfying the inequalities (A) to(C) is a tire in which a tire outer diameter is relatively larger as compared to a tire cross-sectional width, air resistance and rolling resistance are suppressed and thus they can contribute to an improvement in fuel efficiency. Besides, in the inequalities (A) to(C), the symbol "^" represents a power operation, where a number immediately before "^" is a base and a number immediately after "^" is an exponent. For example, "Wt^0.460" in the inequality (A) represents "$Wt^{0.460}$".
The tire preferably comprises at least one lateral groove extending from the circumferential groove in a tire width direction and remaining in a land part.
This is because it can contribute to an improvement in fuel efficiency.

<Definition>

Unless otherwise noted, a "size or the like of each part of a tire" is defined as a value specified in a standardized state where a tire is rim-assembled to a standardized rim, filled with air at a standardized internal pressure, and applied with no load.
A "standardized rim" is a rim, in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Additionally, in a case of tires that are not defined by the standard, the "standardized rim" shall refer to a rim that can be rim-assembled and maintain an internal pressure, that is, one that has the smallest rim diameter and secondly has the narrowest rim width, among rims that do not cause air leakage between the rim and the tire.
A "standardized internal pressure" is an air pressure, in a standard system including a standard on which the tire is based, defined by each standard for each tire, and refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Additionally, in the case of tires that are not defined by the standard, the standardized internal pressure shall refer to a standardized internal pressure (250 KPa or more) of another tire size (specified in the standard) for which the standardized rim is described as a

standard rim. Besides, when a plurality of standardized internal pressures of 250 KPa or more are described, it shall refer to the minimum value among them.

A "maximum load capacity $W_L$" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load.

$$W_L = 0.000011 \times V + 175$$

$$V = \{(Dt/2)^2 - (Dt/2 - Ht)^2\} \times \pi \times Wt$$

A "circumferential groove" refers to a groove that extends continuously in a tire circumferential direction and whose groove width in the tire width direction is 4 mm or more on a tread surface . The circumferential groove may extend linearly along the circumferential direction or may extend in a wavy, sinusoidal, or zigzag shape along the circumferential direction.

A "groove depth D" is a groove depth, in mm, of the deepest circumferential groove among circumferential grooves provided for a tread surface. Here, the groove depth means the maximum value of the depths of the groove.

A "land ratio L" is a ratio, on a tread ground-contacting surface when a maximum load capacity is applied to a tire in a standardized state and the tire touches a flat surface at a camber angle of 0°, of a surface area of the tread ground-contacting surface actually touching the flat surface to a surface area of the tread ground-contacting surface in a state where it is assumed that all grooves are filled. Each surface area of the tread ground-contacting surface is obtained by assembling a tire to a standardized rim, filling the tire with air at a standardized internal pressure, and leaving the tire to stand at 25°C for 24 hours, followed by applying ink to a tire tread surface, applying a maximum load capacity on the tire to press the tire tread surface against cardboard (a camber angle is 0°), and performing transcription to a paper, and it is an average value when the tire is rotated in 72 degree increments in a circumferential direction and the transcription is performed at five sites of the tire. Besides, FIG. 2 is a view schematically showing a shape of the tread ground-contacting surface of a tire. A region surrounded in FIG. 2 represents a shape of a tread ground-contacting surface.

A "thickness H of a rubber layer composed of a rubber composition constituting a tread part" is a thickness of a rubber layer constituting a tread part which is measured along a normal line drawn from a tire center line (tire equator). In a case where a circumferential groove is present on the tire center line, it is measured along a normal line drawn from a center line of a land part nearest to the tire center line. A "center line of a land part" is a straight line passing through a center of a land part in a tire width direction and extending continuously in a tire circumferential direction. A "tread part" is a part forming a ground-contacting surface of a tire and is a member located on an outer side in a tire radial direction with respect to members forming a tire skeleton with steel or a textile material, such as a belt layer, a belt reinforcement layer, a carcass layer, and the like, on a cross section in the tire radial direction, when the tire comprises these members. In a case where the tread part comprises a plurality of rubber layers, H is a thickness obtained by putting thicknesses of all the rubber layers together. FIG. 1 shows a thickness H of a rubber layer constituting a tread part which is measured along a normal line drawn from a tire center line (tire equator).

A "lateral groove" refers to a groove extending from a circumferential groove in a tire width direction and remaining in a land part, and its groove width is not particularly limited. Therefore, examples of the lateral groove include grooves whose groove widths are 2 mm or more, as well as narrow grooves whose groove widths are less than 2 mm and which may be referred to as a sipe.

A "content of a plasticizing agent" also includes an amount of a plasticizing agent that is contained in and extends a rubber component. Similarly, a "content of oil" includes an amount of oil contained in an oil extended rubber.

A "rough road" refers to an unpaved road generally referred to as "offroad".

<Measuring method>

A "styrene content" is calculated by $^1H$-NMR measurement.

A "vinyl content (1 ,2-bond butadiene unit amount)" is measured by an infrared absorption spectrometry.

A "cis content (cis-1 ,4-bond butadiene unit amount)" is measured by an infrared absorption spectrometry.

A "weight-average molecular weight (Mw)" can be calculated in terms of a standard polystyrene based on measurement values obtained by a gel permeation chromatography (GPC) (GPC-8000 Series manufactured by Tosoh Corporation, detector: differential refractometer, column: TSKgel (Registered Trademark) SuperMultiporeHZ-M manufactured by Tosoh Corporation).

An "$N_2SA$ of carbon black" is a value calculated by JIS K 6217-2:2017.
An "$N_2SA$ of silica" is a value measured by a BET method according to ASTM D3037-93.
An "average primary particle size" is a value calculated by an arithmetic mean for 400 primary particles which are observed with a transmission or scanning electron microscope. Besides, in a case where a particle is in a spherical shape, a diameter of the sphere is defined as a particle size, and in a case where it is in a shape other than the spherical shape, an equivalent circle diameter (the positive square root of {4×(area of a particle)/rr}) is calculated from an electron microscope image and is defined as a particle size. It is applied to silica, carbon black, etc.
A "total styrene amount, in % by mass, of a rubber component" is a value obtained by multiplying a styrene content of each of rubbers constituting the entire rubber component (100% by mass) by a content percentage for which each of rubbers accounts in the entire rubber component and adding up all the obtained multiplied values.
Unless otherwise noted, a "softening point of a resin component or the like" is a temperature at which a sphere drops when the softening point specified in JIS K 6220-1 :2015 is measured with a ring and ball softening point measuring device. A softening point measured by another method will be described accordingly.

<Rubber composition constituting tread>

A rubber composition constituting a tread of the present invention will be described. The rubber composition comprises a rubber component comprising an isoprene-based rubber and a styrene-butadiene rubber, silica, and a coupling agent.

(Rubber component)

A rubber component of the present invention comprises an isoprene-based rubber and a styrene-butadiene rubber.

«Isoprene-based rubber»

Examples of the isoprene-based rubber (IR-based rubber) include a natural rubber (NR), an isoprene rubber (IR), a refined NR, a modified NR, a modified IR, and the like. For example, those common in the tire industry such as SIR20, RSS#3, TSR20, and the like can be used as the NR. The IR is not particularly limited, and for example, those common in the tire industry such as IR2200 and the like can be used. Examples of the refined NR include a deproteinized natural rubber (DPNR), an ultra pure natural rubber (UPNR), and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. They may be used alone, or two or more thereof may be used in combination.
A content of an isoprene-based rubber in 100% by mass of the rubber component is preferably greater than 35% by mass, more preferably 40% by mass or more, further preferably greater than 45% by mass. Its upper limit is preferably less than 65% by mass, more preferably 60% by mass or less, further preferably 55% by mass or less. When the content is within the above-described ranges, an IR-based rubber together with a styrene-butadiene rubber easily forms a phase-separated structure, which is preferable.

«SBR»

The SBR is not particularly limited, and for example, an emulsion-polymerized styrene-butadiene rubber (E-SBR), a solution-polymerized styrene-butadiene rubber (S-SBR), and the like can be used. Moreover, the SBR may be a non-modified SBR or a modified SBR. Moreover, as the SBR, a hydrogenated styrene-butadiene copolymer (hydrogenated SBR) can also be used. These SBRs may be used alone, or two or more thereof may be used in combination.
A styrene content of the SBR is preferably greater than 5.0% by mass, more preferably greater than 10.0% by mass, further preferably greater than 20.0% by mass. The styrene content is preferably less than 40.0% by mass, more preferably less than 35.0% by mass, further preferably less than 30.0% by mass. When the styrene content is within the above-described ranges, fuel efficiency and wet grip performance tend to be improved. Besides, in the present specification, the styrene content can be measured by the $^1H$-NMR measurement.
A vinyl content of the SBR is preferably greater than 30% by mass, more preferably greater than 40% by mass, further preferably greater than 50% by mass. The vinyl content is preferably less than 80% by mass, more preferably less than 70% by mass, further preferably less than 65% by mass. When the vinyl content is within the above-described ranges, fuel efficiency and wet grip performance tend to be improved. Besides, the vinyl content can be measured by the above-described method.
An SBR extended with a plasticizing agent (extended SBR) or a non-extended SBR may be used as the SBR.

When the extended SBR is used, an extending amount of the SBR, that is, a content of an extending plasticizing agent in the SBR is preferably 10 to 50 parts by mass based on 100 parts by mass of a rubber solid content of the SBR. For example, oil is appropriately used as the plasticizing agent used for extending the SBR.

As the SBR, for example, SBRs manufactured and sold by Sumitomo Chemical Co., Ltd., JSR Corporation, Asahi Kasei Corporation, Zeon Corporation, etc. can be used.

A content of an SBR in 100% by mass of the rubber component is preferably greater than 35% by mass, more preferably 40% by mass or more, further preferably 45% by mass or more. Its upper limit is preferably less than 65% by mass, more preferably 60% by mass or less, further preferably 55% by mass or less. When it is within the above-described ranges, an SBR together with an IR-based rubber easily forms a phase-separated structure, which is preferable.

«BR»

A BR is not particularly limited, and, for example, a high cis BR having a high cis content, a BR containing a syndiotactic polybutadiene crystal, a BR synthesized using a rare-earth element-based catalyst (a rare-earth-based BR), and the like can be used. These BRs may be used alone, or two or more thereof may be used in combination.

Among them, the BR preferably comprises a high cis BR having a cis content greater than 90% by mass. The cis content is more preferably greater than 95% by mass, further preferably 98% by mass or more. Besides, the cis content can be measured by the above-described method.

Moreover, the BR may be a non-modified BR or a modified BR. Examples of the modified BR include a modified BR in which the same functional group as that of a modified diene-based rubber is introduced. Moreover, as the BR, a hydrogenated butadiene polymer (hydrogenated BR) can also be used.

As the BR, for example, products manufactured by UBE Corporation, JSR Corporation, Asahi Kasei Corporation, Ltd., Zeon Corporation, etc. can be used.

A content of a BR in 100% by mass of the rubber component is preferably less than 20% by mass, more preferably less than 15% by mass, further preferably 10% by mass or less. When the content is within the above-described ranges, an IR-based rubber and an SBR easily form a phase-separated structure, which is preferable. The rubber component may not comprise any BR and an aspect in which the rubber component does not comprise any BR can be given as one preferable aspect. Moreover, the rubber component may comprise a BR, and a lower limit value of the content of the BR in such a case is, for example, greater than 1% by mass, greater than 3% by mass, or greater than 5% by mass.

«Other rubber components»

As the rubber component, a rubber other than the above-described diene-based rubbers can be used. Examples of such a rubber include diene-based rubbers such as a styrene-isoprene-butadiene rubber (SIBR), a chloroprene rubber (CR), an acrylonitrile-butadiene rubber (NBR), and the like, and non-diene-based rubbers such as an ethylene-propylene-diene rubber (EPDM), a butyl rubber (IIR), a halogenated butyl rubber (X-IIR), and the like. These rubbers may be used alone, or two or more thereof may be used in combination.

A content of a diene-based rubber in 100% by mass of the rubber component is preferably greater than 80% by mass, more preferably greater than 90% by mass, most preferably 100% by mass.

«Total styrene amount (S), in % by mass, of rubber component»

A total styrene amount (S), in % by mass, of the rubber component is preferably greater than 5% by mass, more preferably greater than 7% by mass, further preferably 10% by mass or more, from the viewpoint of the effects of the present invention. The total styrene amount (S), in % by mass, of the rubber component is preferably less than 25% by mass, more preferably less than 22% by mass, further preferably less than 20% by mass, from the viewpoint of the effects of the present invention.

(Rubber component synthesized from recycle-derived/biomass-derived raw material)

A monomer that is a structural unit of a synthetic rubber such as an SBR, a BR, and the like may be one derived from petroleum or one recycled from a rubber product such as a tire and the like or a non-rubber product such as polystyrene and the like. Examples of monomers obtained by recycle (recycled monomers) include, but not particularly limited to, a recycle-derived butadiene, a recycle-derived aromatic vinyl compound, and the like. Examples of the above-described butadiene include 1,2-butadiene and 1-3 butadiene. Examples of the above-described aromatic vinyl compound include, but not particularly limited to, styrene and the like. Among them, a recycle-derived butadiene (recycled butadiene) and/or a recycle-derived styrene (recycled styrene) are preferably used as raw materials.

A method of producing a recycled monomer is not particularly limited, examples of which include, for example,

synthesis of a recycled monomer from recycle-derived naphtha obtained by decomposing a rubber product such as a tire and the like. Moreover, a method of producing a recycle-derived naphtha is not particularly limited and may be performed, for example, by extracting naphtha after decomposing a rubber product such as a tire and the like under high temperature and pressure, or decomposing it by microwaves, or mechanically pulverizing it.

Furthermore, a monomer that is a structural unit of a polymer such as an SBR, a BR, and the like may be one derived from biomass. Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant. A microbial fermentation is representative of biological conversion, and examples of chemical and/ physical conversion include a method using a catalyst, a method using a high heat, a method using a high pressure, a method using an electromagnetic wave, a method using a critical liquid, and combinations thereof. Examples of biomass sources for these monomers include, but not particularly limited to, for example, sugar and wood, a plant residue after acquisition of a useful component, a plant-derived ethanol, a biomass naphtha, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference), and this value is used as an index that indicates a biomass ratio of a compound (rubber). A significance of this value will be mentioned below.

In 1 mole of carbon atoms (about $6.02\times10^{23}$), there are about $6.02\times10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1\times10^{-12}$ mol% based on the entire C atoms, as described above. Accordingly, by utilizing a difference between these values, a ratio (biomass ratio) of a natural resources-derived chemical compound (biomass resources-derived chemical compound) in a certain compound (rubber) can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard body provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass (natural-based one), the $^{14}C$ concentration shows a value of approximately 110 pMC though there are regional differences and the like (currently, under a normal condition, it is often not equal to 100). On the other hand, if this $^{14}C$ concentration is measured for a chemical substance derived from a fossil fuel such as petroleum and the like, it shows approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

(Filler)

The rubber composition for tire of the present invention comprises silica, preferably comprises silica and carbon black, and more preferably consists of silica and carbon black.

«Silica»

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.
Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.
As silica recycled from a product comprising silica, for example, silica recovered from an electronic component such as a semiconductor and the like, a tire, a product containing silica such as a desiccant, a filtering material such as diatomaceous earth and the like, and the like, can be used. Moreover, a recovering method is not particularly limited, examples of which include pyrolysis, decomposition by electromagnetic waves, and the like. Among them, silica recovered from an electronic component such as a semiconductor and the like or from a tire is preferable.
As a crystallized silica is insoluble in water, silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.
As commercially-available product of silica, products manufactured by Evonik Industries AG, Rhodia Japan Ltd., Tosoh Silica Corporation, Solvay Japan, Ltd., Tokuyama Corporation, etc. can be used.
A nitrogen adsorption specific surface area ($N_2SA$) of silica is preferably greater than 50 $m^2/g$, more preferably greater than 150 $m^2/g$, further preferably greater than 170 $m^2/g$, further preferably 175 $m^2/g$ or more. An upper limit of the $N_2SA$ of silica is, but not particularly limited to, preferably less than 600 $m^2/g$, more preferably less than 350 $m^2/g$, further preferably less than 260 $m^2/g$. When it is within the above-described ranges, wet grip performance tends to be improved. Besides, the $N_2SA$ of the silica is a value measured by the above-described method.
An average primary particle size of silica is preferably less than 25 nm, more preferably less than 22 nm, further preferably less than 19 nm, from the viewpoints of reinforcing property, fuel efficiency, and the like. A lower limit of the average primary particle size is, but not particularly limited to, preferably greater than 5 nm, more preferably greater than 10 nm, further preferably greater than 13 nm, further preferably greater than 15 nm. Besides, the average primary particle size of silica can be calculated by the above-described method.
A content of silica (total amount of silica) based on 100 parts by mass of the rubber component is preferably greater than 50 parts by mass, more preferably greater than 60 parts by mass, further preferably greater than 70 parts by mass, further preferably greater than 75 parts by mass, further preferably 80 parts by mass or more. On the other hand, the content is preferably less than 200 parts by mass, more preferably less than 180 parts by mass, further preferably less than 150 parts by mass, further preferably less than 120 parts by mass.

«Carbon black»

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Carbon Co., Ltd., Columbia Carbon Corporation., etc. can be used. They may be used alone, or two or more thereof may be used in combination.
Moreover, as carbon black other than the above-described carbon black, carbon black made from a biomass material such as lignin and the like, or a recovered carbon black refined by pyrolyzing a product comprising carbon black such as a tire and the like may be used from the viewpoints of a life cycle assessment, etc.
In the present specification, the term "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight lost content due to the oxidative combustion of the recovered

carbon black is 87% by mass or less. The recovered carbon black may also be expressed by rCB.

A recovered carbon black can be obtained from a pyrolysis process of a used pneumatic tire. For example, EP 3427975 A refers to "Rubber Chemistry and Technology", vol. 85, No. 3, pp.408-449 (2012), particularly, pages 438, 440, and 442 and describes that a recovered carbon black can be obtained by pyrolysis of an organic material at 550 to 800°C under an environment in which oxygen is eliminated or by vacuum pyrolysis at a relatively low temperature ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LDC Co., Ltd., etc. can be used.

A nitrogen adsorption specific surface area ($N_2SA$) of carbon black is preferably greater than 50 $m^2/g$, more preferably greater than 70 $m^2/g$, further preferably greater than 90 $m^2/g$. Moreover, the $N_2SA$ is preferably less than 200 $m^2/g$, more preferably less than 150 $m^2/g$, further preferably less than 130 $m^2/g$. When it is within the above-described ranges, fuel efficiency and wet grip performance tend to be improved. Besides, the nitrogen adsorption specific surface area of the carbon black is calculated by the above-described method.

An average primary particle size of carbon black is preferably less than 30 nm, more preferably less than 28 nm, further preferably less than 25 nm, from the viewpoint of reinforcing property. A lower limit of the average primary particle size is, but not particularly limited to, preferably greater than 10 nm, more preferably greater than 15 nm, further preferably greater than 20 nm. Besides, the average primary particle size of carbon black can be calculated by the above-described method.

A content of carbon black based on 100 parts by mass of the rubber component is preferably greater than 1 part by mass, more preferably greater than 2 parts by mass, further preferably greater than 3 parts by mass, further preferably 5 parts by mass or more. An upper limit of the content is preferably less than 40 parts by mass, more preferably 35 parts by mass or less, further preferably less than 20 parts by mass, further preferably less than 15 parts by mass, further preferably 10 parts by mass or less. When it is within the above-described ranges, fuel efficiency and wet grip performance tend to be improved.

<<Inequality (3) ($A_{CB}/A_{SIL}$>>

$A_{SIL}$ and $A_{CB}$ preferably satisfy the following inequality (3),

$$A_{CB}/A_{SIL} < 0.80 \qquad (3),$$

where, when the rubber composition comprises silica and carbon black, $A_{SIL}$ represents a content, in parts by mass, of the silica and $A_{CB}$ represents a content, in parts by mass, of the carbon black, based on 100 parts by mass of the rubber component.

The right side of the inequality (3) is preferably 0.70, more preferably 0.65, further preferably 0.50, further preferably 0.30, further preferably 0.15. On the other hand, a lower limit of a value of $A_{CB}/A_{SIL}$ is not particularly limited and may be, for example, about 0.01.

«Other filler»

The rubber composition for tire of the present invention may comprise another filler other than silica and carbon black. Such another filler is not particularly limited, and materials known in the field of rubber can be used. Examples of such another filler include, for example, inorganic fillers such as calcium carbonate, talc, alumina, clay, aluminum hydroxide, aluminum oxide, and mica, and the like.

«Content of filler»

A content of fillers (a total content of fillers) based on 100 parts by mass of the rubber component is preferably greater than 70 parts by mass, more preferably greater than 80 parts by mass, further preferably 85 parts by mass or more, further preferably 90 parts by mass or more, from the viewpoint of the effects of the present invention. An upper limit of the content is preferably less than 200 parts by mass, more preferably less than 150 parts by mass, further preferably less than 130 parts by mass.

(Copling agent)

The rubber composition of the present invention comprises a coupling agent. The coupling agent preferably comprises a coupling agent having a nitrogen atom-containing associative group or may be one consisting of a coupling agent having a nitrogen atom-containing associative group. The coupling agent may be used alone, or two or more thereof may be used in combination.

Examples of the coupling agent having a nitrogen atom-containing associative group include amino-based silane coupling agents such as 3-aminopropyltriethoxysilane, 3-aminopropyltrimethoxysilane, 3-(2-aminoethyl)aminopropyltriethoxysilane, and the like, as well as nitrogen atom-containing polysulfide compounds described below (hereinafter also referred to as "N-containing polysulfide"), and the like. Among them, the N-containing polysulfides are preferable.

«N-containing polysulfide»

The N-containing polysulfides are a compound expressed by the following chemical formula (I),

$$R^A\text{-}Y^A\text{-}(S)_x\text{-}Y^B\text{-}R^B \quad (I),$$

(where each of $R^A$ and $R^B$ is the same or different from each other and represents an associative organic group having at least one nitrogen atom, respectively, each of $Y^A$ and $Y^B$ is the same or different from each other and represents a divalent linking group, respectively, S represents a sulfur atom, and x represent an integer of two or more).

Here, the term "associative" means a property which enable a group to associate with another group by at least one bond selected from the group consisting of, particularly, a hydrogen bond, an ionic bond, and a hydrophobic bond. Among them, the association by a hydrogen bond is preferable.

In a case where associative organic groups can associate with each other by a hydrogen bond, $R^A$ and $R^B$ are preferably configured to include a donor site and an acceptor site of the hydrogen bond, respectively. Preferable examples of associative organic groups represented by $R^A$ and $R^B$ include imidazolidinoyl, ureyl, bisureyl, ureido-pyrimidyl, triazolyl, and the like. Further preferably, examples of such organic groups include groups expressed by the following chemical formulas (II) to (VI).

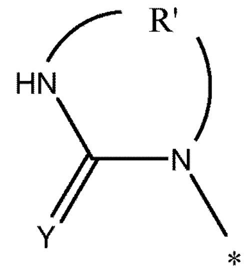
(II)

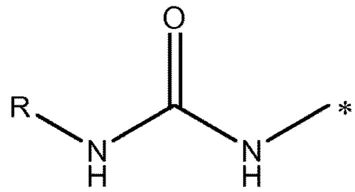
(III)

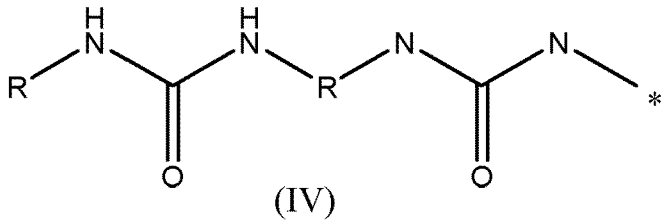
(IV)

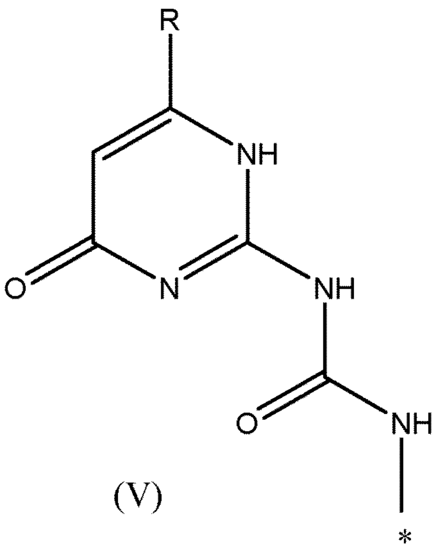
(V)

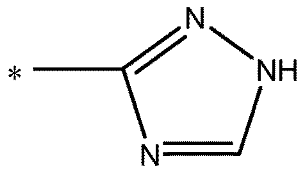
(VI)

Here, the symbols have the following meanings.

- R represents a linear, branched, or cyclic hydrocarbon group and its carbon number is preferably $C_1$-$C_{10}$, more preferably $C_1$-$C_6$. The hydrocarbon group may have a heteroatom in some cases.
- Y represents an oxygen atom or a sulfur atom and is preferably an oxygen atom.
- R' represents a linear, branched, or cyclic hydrocarbon-based group and its carbon number is preferably $C_1$-$C_{10}$, more preferably $C_1$-$C_6$. The hydrocarbon group may have a heteroatom in some cases
- The symbol * represents a moiety binding to $Y^A$ or $Y^B$ (the same applies to chemical formulas described below).

R' may be a hydrocarbylene group such as an alkylene, a substituted alkylene, a cycloalkylene, a substituted cycloalkylene, an arylene, or a substituted arylene. The carbon number of this hydrocarbylene group is preferably $C_1$-$C_{10}$. This hydrocarbylene group may have a heteroatom such as nitrogen, oxygen, or sulfur. These heteroatoms may be included in a hydrocarbylene chain. The ring in the chemical formula (II) is preferably a five-membered ring or a six-membered ring. More preferably, R' is $-CH_2-CH_2-$ or $- CH_2-CH_2-CH_2-$.

$R^A$ and $R^B$ each independently has five or six atoms and is a (di- or tri-) nitrogen-containing heterocycle having at least one carbonyl functional group. According to a preferred embodiment, at least one of $R^A$ and $R^B$ is an imidazolidinone group expressed by the chemical formula (VII). The other of $R^A$ and $R^B$ corresponds to any of the chemical formulas (II) to (VI) and is preferably an imidazolidinone group expressed by the chemical formula (VII).

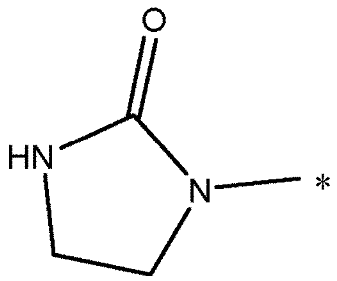

(VII)

$Y^A$ and $Y^B$ in the chemical formula (I) are such groups that do not interfere with $R^A$ or $R^B$ or may be such groups that suppress, if any, the interference with $R^A$ and $R^B$ to a minor extent. Preferably, each of $Y^A$ and $Y^B$ is independently a linear, branched, or cyclic divalent hydrocarbon radical. They may independently have one or more aromatic radicals and/or one or more heteroatoms such as a nitrogen atom, a sulfur atom, an oxygen atom, and the like. This divalent hydrocarbon radical may be optionally substituted, and a substituent may be preferably inert to $R^A$ and $R^B$. According to a preferred embodiment, each of $Y^A$ and $Y^B$ is the same or different and represents a linear alkylene group, and its carbon number is preferably $C_1$-$C_6$. $Y^A$ and $Y^B$ are preferably the same.

x in the chemical formula (I) is preferably an integer of 2 or more and 8 or less, more preferably an integer of 2 or more and 6 or less, further preferably an integer of 2 or more and 4 or less. According to another specific embodiment, x is 2, 3, 4, 5, or 6.

Preferred examples of the N-containing polysulfide include an N-containing polysulfide in which, in the chemical formula (I), each of $R^A$ and $R^B$ is imidazolidinone group expressed by the chemical formula (VII), each of $Y^A$ and $Y^B$ is a linear alkylene group of $C_1$-$C_{13}$, preferably $C_1$-$C_6$, and x is an integer of 2 or more, preferably an integer of 2 or more and 8 or less, more preferably an integer of 2 to 6, further preferably an integer of 2 to 4.

A further preferred example of the N-containing polysulfide is a compound expressed by the following chemical formula (VIII) or (IX).

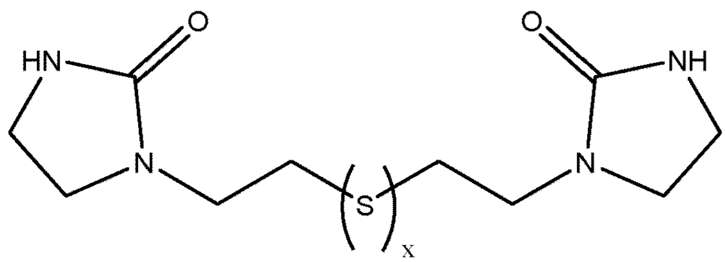

(VIII)

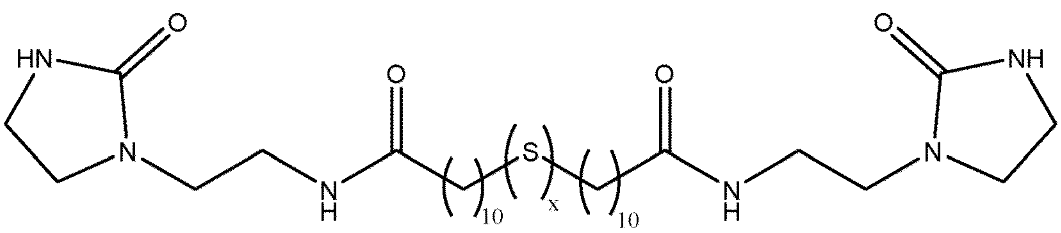

(IX)

Here, x is an integer of 2 or more, preferably an integer of 2 to 8, more preferably an integer of 2 to 6, further preferably an integer of 2 to 4, or further preferably x=4.

A further preferred example of the N-containing polysulfide is a compound expressed by the following chemical formula (X) or (XI).

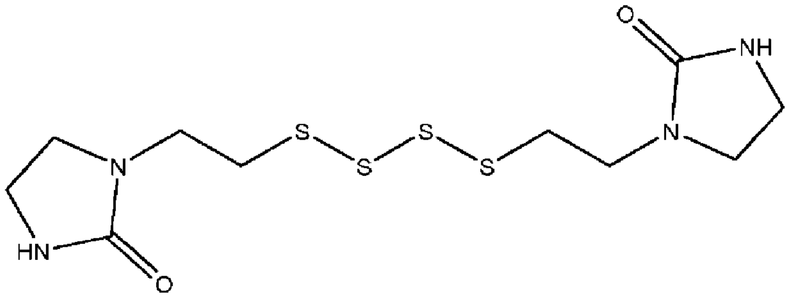

(X)

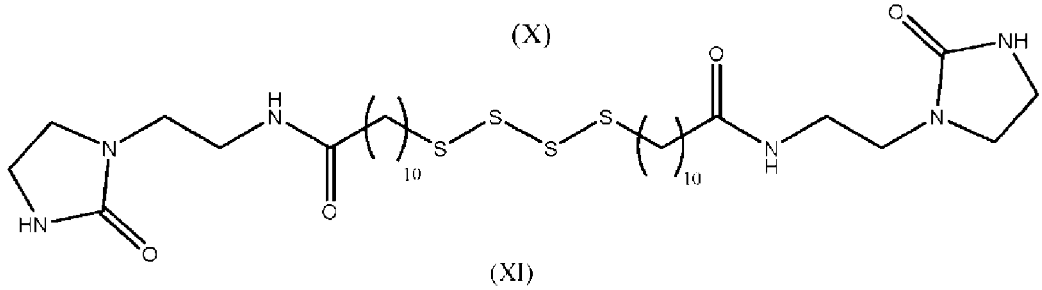

(XI)

Besides, for the N-containing polysulfide as a mixture of compounds different in x, a value of x can consequently become a number different from integer values (average value). In such a case, a preferred range of the average value of x in the mixture of N-containing polysulfides includes positive numbers ranging from 2 to 8, preferably positive numbers ranging from 2 to 6, more preferably positive numbers ranging from 3 to 5, further preferably positive numbers ranging from 3 to 4 or positive numbers ranging from 4 to 5.

For example, the N-containing polysulfide can be produced by the method described in WO 2019/193286.

«Other coupling agents»

As a coupling agent other than the above-described "coupling agent having a nitrogen atom-containing associative group", a coupling agent commonly used in the tire industry can be used, examples of which include, for example, sulfide-based silane coupling agents such as bis(3-triethoxysilylpropyl)disulfide, bis(3-triethoxysilylpropyl) tetrasulfide, and the like; mercapto-based silane coupling agents such as 3-mercaptopropyltrimethoxysilane, NXT-Z100, NXT-Z45, and NXT (3-octanoylthio-propyltriethoxysilane) manufactured by Momentive Performance Materials, and the like; vinyl-based silane coupling agents such as vinyltriethoxysilane, vinyltrimethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; and chloro-based silane coupling agents such as 3-chloropropyltrimethoxysilane, 3-chloropropyltriethoxysilane, and the like. Among them, sulfide-based silane coupling agents are preferable. These silane coupling agents may be used alone, or two or more thereof may be used in combination.

«Content of coupling agent»

A content of a coupling agent based on 100 parts by mass of silica (a total amount of all of a plurality of coupling agents when used in combination) is preferably greater than 1 part by mass, more preferably greater than 3 parts by mass, further preferably greater than 5 parts by mass, further preferably greater than 7 parts by mass, from the viewpoint of enhancing dispersibility of the silica. Moreover, the content is preferably less than 20 parts by mass, more preferably less than 18 parts by mass, further preferably less than 15 parts by mass, from the viewpoint of preventing deterioration of abrasion resistance.

Although a content of a coupling agent having a nitrogen atom-containing associative group based on 100 parts by mass of silica is in the same ranges as described above, in a preferred aspect, it is preferably greater than 6 parts by mass, more preferably greater than 7 parts by mass, further preferably 8 parts by mass or more. On the other hand, the content is preferably less than 12 parts by mass, more preferably less than 11 parts by mass, further preferably less than 10 parts by mass.

(Resin component)

The rubber composition relating to the present embodiment may comprise a resin component in combination.

The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Also, each resin component may be used alone, or two or more thereof may be used in combination, respectively.

«C9-based resin»

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

«C5-based resin»

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

«C5/C9-based resin»

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

«Dicyclopentadiene-based resin»

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

«Aromatic vinyl-based resin»

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

«Coumarone-based resin»

A "coumarone-based resin" refers to a resin comprising coumarone as a monomer component and may be one obtained by hydrogenating or modifying it. As the coumarone-based resin, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

«Indene-based resin»

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

«Terpene-based resin»

A "terpene-based resin" refers to a resin comprising a terpene compound such as α-pinene, β-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, α-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

«Rosin-based resin»

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

«Phenol-based resin»

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

«Content»

A content of a resin component based on 100 parts by mass of the rubber component is preferably greater than 1 part by mass, more preferably greater than 3 parts by mass, further preferably greater than 4 parts by mass, further preferably 5 parts by mass or more. Moreover, the content of the resin component is preferably less than 30 parts by mass, more preferably less than 25 parts by mass, further preferably less than 20 parts by mass.

(Plasticizing agent)

The rubber composition for tire of the present invention can comprise a plasticizing agent other than the above-described resin component. The plasticizing agent is a material giving a rubber component plasticity and includes both a plasticizing agent that is liquid (in a liquid state) at normal temperature (25°C) and a plasticizing agent that is solid at normal temperature (25°C). Specific examples of the plasticizing agent other than the above-described resin component include, for example, oil, a liquid polymer, an ester-based plasticizing agent, and the like. The plasticizing agents other than resin components may be used alone, or two or more thereof may be used in combination.

«Oil»

Examples of oil include, for example, process oils, vegetable oils, animal oils, and the like. Examples of the process oils include paraffinic process oils (mineral oils), naphthenic process oils, aromatic process oils, and the like. Specific examples of the process oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, process oils each having a low content of a polycyclic aromatic compound (PCA) can also be used. Examples of the process oils each having a low content of a PCA include MES, TDAE, heavy naphthenic oil, and the like. Moreover, from the viewpoint of a life cycle assessment, one obtained by refining a waste oil after use for a rubber mixing machine or an engine or waste cooking oil used in a cooking facility may also be used.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at normal temperature (25°C). These vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1, 2-diacylglycerol, 1, 3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at normal temperature (25°C).

Whether the rubber composition comprises the above-described acylglycerol can be confirmed by, but not particularly limited to, $^{1}$H-NMR measurement. For example, a heavy chloroform in which a rubber composition containing triacylglycerol is immersed at normal temperature (25°C) for 24 hours and then removed is subjected to $^{1}$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm$0.10 ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol that can be derived therefrom, and the like.

«Liquid polymer»

The liquid polymer is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid polymer may be used alone, or two or more thereof may be used in combination.

«Ester-based plasticizing agent»

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

«Content»

A content of a plasticizing agent other than the resin component based on 100 parts by mass of the rubber component (a total amount of all of a plurality of such plasticizing agents when used in combination) is preferably greater than 1 part by mass, more preferably greater than 2 parts by mass, further preferably greater than 3 parts by mass. Moreover, the content of the plasticizing agent is preferably less than 50 parts by mass, more preferably less than 40 parts by mass, further preferably less than 30 parts by mass.

(Other compounding agents)

For the rubber composition for tire of the present invention, a vulcanized rubber particle, wax, an antioxidant, stearic acid, zinc oxide, a vulcanizing agent, a vulcanization accelerator, and the like can be used as other compounding agents.

«Vulcanized rubber particle»

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. They may be used alone, or two or more thereof may be used in combination. The vulcanized rubber particle is not particularly limited and may be a non-modified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used.

«Wax»

Wax is not particularly limited, and any of those commonly used in the tire industry can be appropriately used, examples of which include, for example, a petroleum-based wax, a mineral-based wax, a synthetic wax, and the like. Among them, the petroleum-based wax is preferable. Examples of the petroleum-based wax include, for example, a paraffin wax, a microcrystalline wax, a specially selected wax thereof, and the like. Among them, the paraffin wax is preferable. As wax, for example, those manufactured and sold by Ouchi Shinko Chemical Industry Co., Nippon Seiro Co., Ltd., PARAMELT, etc. can be used. Wax may be used alone, or two or more thereof may be used in combination.

A content of wax when compounded based on 100 parts by mass of the rubber component is preferably greater than 0.3 parts by mass, more preferably greater than 0.5 parts by mass, further preferably 1.0 parts by mass or more. On the other hand, the content is preferably less than 4.0 parts by mass, more preferably less than 3.0 parts by mass, further preferably less than 2.0 parts by mass.

«Antioxidant»

An antioxidant is not particularly limited, and any of those commonly used in the tire industry can be appropriately used. Examples of the antioxidant include, for example, quinoline-based antioxidants, quinone-based antioxidants, phenol-based antioxidants, phenylenediamine-based antioxidants, a carbamic acid metal salt, and the like. Among them, the phenylenediamine-based antioxidants are preferable for the reason that they can exert an effect of improving ozone resistance better. The antioxidant can be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass. On the other hand, the content is preferably less than 7.0 parts by mass, more preferably less than 5.0 parts by mass, further preferably less than 3.0 parts by mass.

«Stearic acid»

A content of stearic acid when compounded based on 100 parts by mass of the rubber component is preferably greater than 0.5 parts by mass, more preferably greater than 0.7 parts by mass, further preferably greater than 1.0 parts by mass, from the viewpoint of processability. On the other hand, the content is preferably less than 10 parts by mass, more preferably less than 5 parts by mass, further preferably less than 3 parts by mass, from the viewpoint of vulcanization rate.

«Zinc oxide»

A content of zinc oxide when compounded based on 100 parts by mass of the rubber component is preferably greater than 0.5 parts by mass, more preferably greater than 0.7 parts by mass, further preferably greater than 1 part by mass from the viewpoint of processability. On the other hand, the content is preferably less than 10 parts by mass, more preferably less than 7 parts by mass, further preferably less than 5 parts by mass, from the viewpoint of abrasion resistance.

«Vulcanizing agent»

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, the use of sulfur is preferable. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A content of a vulcanizing agent when compounded based on 100 parts by mass of the rubber component is preferably greater than 0.4 parts by mass, more preferably greater than 0.7 parts by mass, further preferably 1.0 parts by mass or more. On the other hand, the content is preferably less than 6.0 parts by mass, more preferably less than 5.0 parts by mass, further preferably less than 3.0 parts by mass. When the content of the vulcanizing agent is within the above-described ranges, an appropriate reinforcing effect tends to be obtained, and the effects of the present invention tend to be exerted better. Besides, in a case where the vulcanizing agent includes a component other than sulfur like an oil-processing sulfur and the like, the content of the vulcanizing agent means a content of a sulfur component itself.

«Vulcanization accelerator»

A vulcanization accelerator is not particularly limited, and known vulcanization accelerators can be used, examples of which include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiuram-based vulcanization accelerator, and the guanidine-based vulcanization accelerator are preferable, and the sulfenamide-based vulcanization accelerator is more preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), and the like. Examples of the thiuram-based vulcanization accelerator include, for example, tetramethylthiuram monosulfide, tetramethylthiuram disulfide, tetrabenzylthiuram disulfide (TBzTD), and the like. Examples of the guanidine-based vulcanization accelerator include, for example, 1,3-diphenylguanidine (DPG), diorthotrilguanidine, orthotrilbiguanidine, and the like.

A content of a vulcanization accelerator based on 100 parts by mass of the rubber component is preferably greater than 0.5 parts by mass, more preferably greater than 1.0 parts by mass, further preferably greater than 2.0 part by mass. On the other hand, the content is preferably less than 8.0 parts by mass, more preferably less than 6.0 parts by mass, further preferably less than 5.0 parts by mass. When the content of the vulcanization accelerator is within the above-described ranges, breaking strength and elongation tend to be secured, and the effects of the present invention tend to be

exhibited better.

In the present specification, various materials each having a carbon atom (for example, a rubber, oil, a resin component, a vulcanization accelerator, an antioxidant, a surfactant, and the like) may be derived from carbon dioxide in the atmosphere. These various materials which are compounding substances can be obtained by converting carbon dioxide directly or converting methane obtained via a process of methanation by which methane is synthesized from carbon dioxide.

<Tire>

The tire of the present invention will be described below with reference to the drawings as appropriate. However, the drawings are merely examples for explanation.

The tire of the present invention is a tire comprising a tread composed of the above-described rubber composition, and a tread surface of the tread comprises a circumferential groove extending continuously in a circumferential direction.

(Circumferential groove)

The circumferential groove may extend linearly along the circumferential direction or may extend in a wavy, sinusoidal, or zigzag shape along the circumferential direction. Here, the zigzag shape is intended to be in a shape in which the center of the circumferential groove in the width direction extends in the tire circumferential direction while oscillating in the tire width direction. Accordingly, examples of the zigzag shape include a shape in which a groove in a linear shape repeatedly bends, as well as a shape in which a curved groove repeatedly curves in a wavy shape.

The number of circumferential grooves is not particularly limited and may be one, two, three, four, or five or more. A groove depth of a circumferential groove is a distance to the deepest part of the groove in the tire radial direction and is a maximum value of the depth of the groove. The groove depth is correlated with a thickness of the tread and is usually around 70% of the thickness of the tread.

(Inequality (1), inequality (2))

In the tire of the present invention, when a content, in parts by mass, of the isoprene-based rubber is referred to as $A_{IR}$, a content, in parts by mass, of the styrene-butadiene rubber is referred to as $A_{SBR}$, a content, in parts by mass, of silica is referred to as $A_{SIL}$, based on 100 parts by mass of the rubber component, and a groove depth, in mm, of a deepest circumferential groove among the circumferential grooves is referred to as D, $A_{IR}$, $A_{SBR}$, $A_{SIL}$, and D satisfy the following relationships,

$$(1)\ A_{SIL}/A_{SBR} > 1.00$$

$$(2)\ A_{IR}/D > 3.0.$$

<<$A_{SIL}/A_{SBR}$>>

The right side of the inequality (1) is preferably 1.09, more preferably 1.50, further preferably 1.59, further preferably 1.69, further preferably 1.79, further preferably 1.88, further preferably 2.00. On the other hand, an upper limit of a value of $A_{SIL}/A_{SBR}$ is, but not particularly limited to, for example, about 5.00 as a reference value from the viewpoint of the effects of the present invention.

<<$A_{IR}/D$>>

The right side of the inequality (2) is preferably 3.2, more preferably 4.0, further preferably 5.0, further preferably 6.0, further preferably 7.0, further preferably 8.0. On the other hand, an upper limit of a value of $A_{IR}/D$ is, but not particularly limited to, for example, about 12.0 as a reference value from the viewpoint of the effects of the present invention.

D represents a groove depth of a deepest circumferential groove among circumferential grooves. For example, D is as shown in FIG. 1. The value of D is correlated with the thickness of the tread and is usually around 70% of the thickness of the tread.

(Inequality (4), ($A_{SIL}$ × L))

In the tire of the present invention, when a land ratio, in %, of its tread ground-contacting surface is referred to as L, the content $A_{SIL}$, in parts by mass, of the silica and L preferably satisfy the following relationship,

$$(4)\ A_{SIL} \times L > 2500.$$

The right side of the inequality (4) is preferably 3000, more preferably 3500, further preferably 4000, further preferably 5000. On the other hand, an upper limit of a value of $A_{SIL}$ × L is, but not particularly limited to, for example, about 14000 as a reference value from the viewpoint of the effects of the present invention.

The land ratio L is preferably 50% or more, more preferably greater than 55%, further preferably greater than 60%, from the viewpoints of grip performance and abrasion resistance. On the other hand, the land ratio L is preferably less than 80%, more preferably 75% or less, further preferably less than 70%, from the viewpoint of grip performance.

(Inequality (5), (H × S))

In the tire of the present invention, when a thickness, in mm, of a rubber layer composed of the rubber composition constituting its tread is referred to as H and a total styrene amount, in % by mass, in the rubber component is referred to as S, H and S preferably satisfy the following relationship,

$$(5)\ H \times S < 230.$$

The value on the right side in the inequality (5) is preferably 220, more preferably 200, further preferably 180, further preferably 170. On the other hand, a lower limit of a value of H × S is, but not particularly limited to, for example, about 50 as a reference value from the viewpoint of the effects of the present invention.

The thickness H of the rubber layer may be larger than 4 mm and is preferably 6 mm or more, more preferably larger than 8 mm, further preferably 9 mm or more. Moreover, its upper limit is, but not particularly limited to, preferably smaller than 35 mm, more preferably smaller than 25 mm. For example, H is as shown in FIG. 1.

(Inequalities (A) to (C))

In the tire of the present invention, Wt and Dt preferably satisfy one of the following inequalities (A), (B), and (C),

$$Wt < 225 \text{ and } Dt \geq 59.078 \times Wt^{\wedge}0.460 \ \cdots \ (A)$$

$$225 \leq Wt < 235 \text{ and } Dt \geq 59.078 \times Wt^{\wedge}0.620\text{-}967.673 \ \cdots \ (B)$$

$$235 \leq Wt \text{ and } Dt \geq Wt^{\wedge}0.6+750 \ \cdots \ (C)$$

where Wt represents a tire cross-sectional width in mm, and Dt represents a tire outer diameter in mm when the tire is assembled to a rim and internal pressure is set to be 250 kPa or more.

One of the inequalities (A) to (C) is applied in accordance with a magnitude of the tire cross-sectional width Wt, in mm. That is, in the case where Wt < 225, the inequality (A) is applied, in the case where 225 ≤ Wt < 235, the inequality (B) is applied, and in the case where 235 ≤ Wt, the inequality (C) is applied. As a tire satisfying the requirements of the inequalities (A) to (C) is a tire whose tire outer diameter is relatively larger than its tire cross-sectional width, air resistance and rolling resistance are suppressed, which can contribute to an improvement in fuel efficiency. Besides, FIG. 3 is a view showing a tire cross-sectional width (Wt), a tire cross-sectional height (Ht), and the tire outer diameter (Dt).

(Lateral groove)

The tire of the present invention preferably comprises at least one lateral groove extending from its circumferential groove in the tire width direction and remaining in a land part. This is because it can contribute to an improvement in fuel efficiency. The lateral groove is not particularly limited and may be any one extending from a circumferential groove in the tire width direction and remaining in a land part. Therefore, a direction in which the lateral groove extends can make any angle with respect to a direction in which the circumferential groove extends. Moreover, a groove width of the lateral groove

is also not particularly limited, and the lateral groove may be a groove whose groove width is 2 mm or more, as well as a narrow groove whose groove width is smaller than 2 mm, which may also be referred to as a sipe. Moreover, a groove depth of the lateral groove is also not particularly limited.

FIG. 4 is a view schematically showing a tread pattern of a tire relating to one embodiment of the present invention. In FIG. 4, TW represents a tread ground-contacting width, and lateral grooves extending from a circumferential groove in a tire width direction and remaining in a land part are shown as lateral grooves 4.

<Production>

The rubber composition relating to the present invention can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary. For example, the base kneading step may be divided into a plurality of masterbatch steps or may be further subjected to a remilling step in which one or more processes of kneading materials are repeated.

Examples of the division into the masterbatch steps include, for example, dividing materials into one masterbatch comprising an isoprene-based rubber, and silica in an amount to be distributed thereto and the other masterbatch comprising a rubber component other than the isoprene-based rubber, and silica in an amount to be distributed thereto, and kneading each of the masterbatches in advance. Since silica has a property of being easily distributed in an isoprene-based rubber among the rubber components, unbalanced distribution of silica in a rubber component can be corrected by the division into masterbatches as described above. Each of the above-described masterbatches may be one consisting of respective rubber component and silica or may be one further comprising another chemical such as a coupling agent, oil, and the like, excluding a vulcanizing agent and a vulcanization accelerator. In a case where division into masterbatch steps is performed, each masterbatch is kneaded and the obtained masterbatches are mixed, and another chemical, if any, other than a vulcanizing agent and a vulcanization accelerator, which does not undergo any kneading step yet, is added to the mixture of these masterbatches, and, then, the mixture is further kneaded. A content of each chemical compounded into masterbatches is basically the same as the content of each of the above-described chemicals when an amount of a rubber component in the masterbatches is to be 100 parts by mass.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes. Here, the base kneading step refers to a step that also includes masterbatch steps or a remilling step.

The tire of the present invention can be produced using the above-described rubber composition by a usual method. That is, the tire can be produced by extruding unvulcanized rubber compositions, in which the above-described components are compounded for rubber components as appropriate, into a shape of a rubber layer constituting a tread surface of a tread part with an extruder equipped with a mouthpiece having a predetermined shape, attaching the extruded unvulcanized tread together with other tire members on a tire forming machine to form an unvulcanized tire by a usual molding method, followed by heating and pressurizing this unvulcanized tire in a vulcanizing machine. Examples of the vulcanization condition include, but not particularly limited to, for example, a method of vulcanizing at 150°C to 200°C for 10 to 30 minutes.

<Application>

Examples of the tire include a pneumatic tire, a non-pneumatic tire, and the like. Among them, a pneumatic tire is preferable. The tire can be used as a tire for a passenger car, a tire for a large passenger car, a tire for a large SUV, a heavy-duty tire for truck, bus, etc., a tire for a light truck, a motorcycle tire, a racing tire (high-performance tire), and the like. Among them, the tire can be appropriately used as a tire for a passenger car.

A "tire for a passenger car" is a tire that is presupposed to be mounted to a vehicle running with four wheels and that has a maximum load capacity (standardized load) of 1000 kg or less.

EXAMPLE

Hereinafter, examples considered to be preferable in implementing the present invention (Examples) will be described, though the scope of the present invention is not limited to only these Examples. Results, which are calculated

based on evaluation methods described below considering a tire obtained in accordance with each Tables using various chemicals described below, are shown in the lower part of each Table.

<Various chemicals>

Various chemicals used in Examples and Comparative examples are collectively shown below.

IR-based rubber: Natural rubber (TSR 20)
SBR: SE-0212 manufactured by Sumitomo Chemical Co., Ltd. (amine-based terminal-modified S-SBR, styrene content: 25% by mass, vinyl content: 61.0 mol%)
BR: UBEPOL BR150B manufactured by Ube Corporation (cis content: 98% by mass, vinyl content: 1% by mass)
Carbon black: SEAST N220 manufactured by Mitsubishi Chemical Corporation ($N_2SA$: 114 $m^2/g$, average primary particle size: 23 nm)
Silica: Ultrasil VN3 manufactured by Evonik Industries AG ($N_2SA$: 175 $m^2/g$, average primary particle size: 17 nm)
Coupling agent 1: Si266 manufactured by Evonik Industries AG (bis(3-triethoxysilylpropyl)disulfide)
Coupling agent 2: bis{2-(imidazolidin-2-one-1-yl)ethyl}tetrasulfide Coupling agent 3: bis[10-{2-(imidazolidin-2-one-1-yl)ethyl aminocarbonyl}desyl]tetrasulfide
Oil: Diana process NH-70S manufactured by Idemitsu Kosan Co., Ltd. (aromatic process oil)
Wax: OZOACE (Registered Trademark) 0355 manufactured by Nippon Seiro Co., Ltd.
Antioxidant: Nocrac 6C manufactured by Ouchi Shinko Chemical Industry Co., Ltd. (N-(1,3-dimethylbutyl)-N'-phenyl-p-phenylenediamine)
Stearic acid: Bead stearic acid "CAMELLIA" manufactured by NOF CORPORATION
Zinc oxide: Zinc oxide No. 1 manufactured by Mitsui Mining & Smelting Co., Ltd.
Sulfur: Powdered sulfur manufactured by Tsurumi Chemical Industry Co., ltd.
Vulcanization accelerator 1: Nocceler NS manufactured by Ouchi Shinko Chemical Industry Co., Ltd. (N-tert-butyl-2-benzothiazolyl sulfenamide (TBBS))
Vulcanization accelerator 2: Nocceler D manufactured by Ouchi Shinko Chemical Industry Co., Ltd. (N, N'-diphenylguanidine (DPG))

<Production of unvulcanized rubber composition>

(Production by usual kneading method)

According to the compounding formulation shown in Table 1, using a 1.7 L Banbury mixer, all chemicals other than sulfur and a vulcanization accelerator are kneaded for 5 minutes under a condition of a discharge temperature at 150°C, to obtain a kneaded product. Sulfur and the vulcanization accelerator are added to the kneaded product, and using an open roll, the mixture is kneaded for 4 minutes until the temperature reaches 105°C, to obtain an unvulcanized rubber composition.

(Production by masterbatch)

According to the compounding formulation shown in Table 2, an unvulcanized rubber is produced by a masterbatch method.
That is, using a 1.0 L pressure-type kneader, chemicals relating to masterbatch 1 in Table 2 are kneaded for 4 minutes under a condition of a discharge temperature at 150°C, thereby preparing masterbatch 1.
Similarly, using a 1.0 L pressure-type kneader, chemicals relating to masterbatch 2 in Table 2 are kneaded for 4 minutes under a condition of a discharge temperature at 150°C, thereby preparing masterbatch 2.
Using a 1.7 L Banbury mixer, the above-described masterbatch 1 and masterbatch 2 and all remaining chemicals other than sulfur and a vulcanization accelerator are kneaded for 5 minutes under a condition of a discharge temperature at 150°C, to obtain a kneaded product. Sulfur and the vulcanization accelerator are added to the kneaded product, and using an open roll, the mixture is kneaded for 4 minutes until the temperature reaches 105°C, to obtain an unvulcanized rubber composition.

Table 1

| Rubber compounding | A | B | C | D | E | a | b | c |
|---|---|---|---|---|---|---|---|---|
| Compounding amount (part by mass) | | | | | | | | |
| IR-based rubber ($A_{IR}$) | 50 | 55 | 60 | 50 | 40 | 25 | 50 | 25 |

(continued)

| Rubber compounding | A | B | C | D | E | a | b | c |
|---|---|---|---|---|---|---|---|---|
| Compounding amount (part by mass) | | | | | | | | |
| SBR ($A_{SBR}$) | 50 | 45 | 40 | 50 | 50 | 75 | 50 | 75 |
| BR | - | - | - | - | 10 | - | - | - |
| Carbon black ($A_{CB}$) | 10 | 5 | 5 | 35 | 10 | 10 | 60 | 60 |
| Silica ($A_{SIL}$) | 80 | 85 | 85 | 55 | 80 | 80 | 30 | 30 |
| Coupling agent 2 | 6.4 | 6.8 | 6.8 | 4.4 | 6.4 | 6.4 | 2.4 | 2.4 |
| Oil | 15 | 15 | 15 | 15 | 15 | 15 | 15 | 15 |
| Wax | 1 | 1 | 1 | 1 | 1 | 1 | 1 | 1 |
| Antioxidant | 2 | 2 | 2 | 2 | 2 | 2 | 2 | 2 |
| Stearic acid | 2 | 2 | 2 | 2 | 2 | 2 | 2 | 2 |
| Zinc oxide | 2 | 2 | 2 | 2 | 2 | 2 | 2 | 2 |
| Sulfur | 1 | 1 | 1 | 1 | 1 | 1 | 1 | 1 |
| Vulcanization accelerator 1 | 2 | 2 | 2 | 2 | 2 | 2 | 2 | 2 |
| Vulcanization accelerator 2 | 2 | 2 | 2 | 2 | 2 | 2 | 2 | 2 |
| Total styrene amount (S) (% by mass) | 12.5 | 11.3 | 10.0 | 12.5 | 12.5 | 18.8 | 12.5 | 18.8 |

Table 2

| Rubber compounding | F | G | d |
|---|---|---|---|
| Compounding amount (part by mass) | | | |
| Masterbatch 1 | | | |
| IR-based rubber ($A_{IR}$) | 40 | 50 | 25 |
| Silica ($A_{SIL}$ 1) | 34 | 34 | 15 |
| Coupling agent 3 | 2.72 | 2.72 | 1.2 |
| Oil | 6 | 6 | 3.75 |
| Masterbatch 2 | | | |
| SBR ($A_{SBR}$) | 50 | 50 | 65 |
| BR | 10 | - | 10 |
| Silica ($A_{SIL}$ 2) | 51 | 51 | 45 |
| Coupling agent 1 | 4.08 | 4.08 | 3.6 |
| Oil | 9 | 9 | 11.25 |
| Carbon black ($A_{CB}$) | 5 | 5 | 30 |
| Wax | 1 | 1 | 1 |
| Antioxidant | 2 | 2 | 2 |
| Stearic acid | 2 | 2 | 2 |
| Zinc oxide | 2 | 2 | 2 |
| Sulfur | 1 | 1 | 1 |
| Vulcanization accelerator 1 | 2 | 2 | 2 |
| Vulcanization accelerator 2 | 2 | 2 | 2 |
| Total styrene amount (S) (% by mass) | 12.5 | 12.5 | 16.3 |

<Production of test tire>

(Tire to be produced)

Tires to be produced are tires P and S for a passenger car described in the following Table.

Table 3

| | Tire | |
|---|---|---|
| | P | S |
| Tire size | 195/65R17 | 285/45R22 |
| Tire cross-sectional width Wt (mm) | 195 | 285 |
| Tire outer diameter Dt (mm) | 685.3 | 815.3 |
| Value on the right side of inequality (A) | 668.1 | - |
| Value on the right side of inequality (B) | - | - |
| Value on the right side of inequality (C) | - | 779.7 |

(Production of tire)

According to Tables 4 to 5, each of the above-described unvulcanized rubber compositions is molded into a shape of a tread, attached together with other tire members, and vulcanized for 15 minutes at 170°C, thereby obtaining test tires (tire P, tire S) for a passenger car.

<Abrasion resistance on rough road>

Each test tire is mounted on a domestic FF 2000cc vehicle, a groove depth of a tread part of the tire is measured after the vehicle is made to run a running distance of 5000 km on a road surface of a rough road at a speed of 100 to 150 km/h, and a running distance when the groove depth of the tire decreases by 1 mm is calculated and is indicated as an index using the following equation. The larger the index is, the better the abrasion resistance is. Abrasion resistance index = (a running distance when tire groove depth decreases by 1 mm) / (a running distance when tire groove depth of a reference comparative example decreases by 1 mm) × 100.

Table 4

| (Tire P: 195/65R17) | | | | | | | | | | | | |
|---|---|---|---|---|---|---|---|---|---|---|---|---|
| | | Example | | | | | | | | Comparative example | | |
| | | 1 | 2 | 3 | 4 | 5 | 6 | 7 | 8 | 1 | 2 | 3 |
| Compounding for tread rubber | | A | B | B | B | B | C | D | E | a | b | c |
| Tire | | P | P | P | P | P | P | P | P | P | P | P |
| Total styrene amount (S) (% by mass) | | 12.5 | 11.3 | 11.3 | 11.3 | 11.3 | 10.0 | 12.5 | 12.5 | 18.8 | 12.5 | 18.8 |
| Groove depth of circumferential groove (mm) (D) | | 9 | 9 | 6 | 9 | 9 | 9 | 9 | 12 | 9 | 9 | 9 |
| Land ratio (%) (L) | | 64 | 64 | 64 | 50 | 75 | 64 | 64 | 64 | 64 | 64 | 64 |
| Thickness of rubber layer (mm) (H) | | 13 | 13 | 9 | 13 | 13 | 13 | 13 | 17 | 13 | 13 | 13 |
| Inequality (1) | $A_{SIL}/A_{SBR}$ | 1.60 | 1.89 | 1.89 | 1.89 | 1.89 | 2.13 | 1.10 | 1.60 | 1.07 | 0.60 | 0.40 |
| Inequality (2) | $A_{IR}/D$ | 5.6 | 6.1 | 9.2 | 6.1 | 6.1 | 6.7 | 5.6 | 3.3 | 2.8 | 5.6 | 2.8 |
| Inequality (3) | $A_{CB}/A_{SIL}$ | 0.13 | 0.06 | 0.06 | 0.06 | 0.06 | 0.06 | 0.64 | 0.13 | 0.13 | 2.00 | 2.00 |
| Inequality (4) | $A_{SIL} \times L$ | 5120 | 5440 | 5440 | 4250 | 6375 | 5440 | 3520 | 5120 | 5120 | 1920 | 1920 |
| Inequality (5) | $H \times S$ | 163 | 146 | 101 | 146 | 146 | 130 | 163 | 213 | 244 | 163 | 244 |

(continued)

| (Tire P: 195/65R17) | | | | | | | | | | | |
|---|---|---|---|---|---|---|---|---|---|---|---|
| | Example | | | | | | | | Comparative example | | |
| | 1 | 2 | 3 | 4 | 5 | 6 | 7 | 8 | 1 | 2 | 3 |
| Abrasion resistance on rough road | 130 | 135 | 110 | 125 | 140 | 145 | 105 | 105 | 80 | 100 | 90 |

Table 5

| (Tire S: 285/45R22) | | | | | | | |
|---|---|---|---|---|---|---|---|
| | | Example | | | | | Comparative example |
| | | 9 | 10 | 11 | 12 | 13 | 4 |
| Compounding for tread rubber | | F | F | F | F | G | d |
| Tire | | S | S | S | S | S | S |
| Total styrene amount (S) (% by mass) | | 12.5 | 12.5 | 12.5 | 12.5 | 12.5 | 16.25 |
| Groove depth of circumferential groove (mm) (D) | | 12 | 9 | 12 | 12 | 15 | 12 |
| Land ratio (%) (L) | | 64 | 64 | 50 | 75 | 64 | 64 |
| Thickness of rubber layer (mm) (H) | | 17 | 13 | 17 | 17 | 21 | 13 |
| Inequality (1) | $A_{SIL}/A_{SBR}$ | 1.70 | 1.70 | 1.70 | 1.70 | 1.70 | 0.92 |
| Inequality (2) | $A_{IR}/D$ | 3.3 | 4.4 | 3.3 | 3.3 | 3.3 | 2.1 |
| Inequality (3) | $A_{CB}/A_{SIL}$ | 0.06 | 0.06 | 0.06 | 0.06 | 0.06 | 0.50 |
| Inequality (4) | $A_{SIL} \times L$ | 5440 | 5440 | 4250 | 6375 | 5440 | 3840 |
| Inequality (5) | $H \times S$ | 213 | 163 | 213 | 213 | 263 | 211 |
| Abrasion resistance on rough road | | 140 | 110 | 125 | 155 | 135 | 100 |

<Embodiments>

Preferred embodiments are described below.

[1] A tire comprising a tread,

wherein a rubber composition constituting the tread comprises a rubber component comprising an isoprene-based rubber and a styrene-butadiene rubber, silica, and a coupling agent,
wherein a tread surface of the tread comprises circumferential grooves extending continuously in a circumferential direction, and
wherein $A_{IR}$, $A_{SBR}$, $A_{SIL}$, and D satisfy the following relationships, where the right side of the inequality (1) is preferably 1.09, and the right side of the inequality (2) is preferably 3.2, more preferably 4.0, further preferably 5.0,

$$(1)\ A_{SIL}/A_{SBR} > 1.00$$

$$(2)\ A_{IR}/D > 3.0$$

where $A_{IR}$ represents a content, in parts by mass, of the isoprene-based rubber, $A_{SBR}$ represents a content, in parts by mass, of the styrene-butadiene rubber, $A_{SIL}$ represents a content, in parts by mass, of the silica, based on 100 parts by mass of the rubber component, and D represents a groove depth, in mm, of a deepest circumferential groove among the circumferential grooves.

[2] The tire of [1] above, wherein the right side of the inequality (1) is 1.50, preferably 1.59, more preferably 1.69, further preferably 1.79, further preferably 1.88, further preferably 2.00.
[3] The tire of [1] or [2] above, wherein the right side of the inequality (2) is 6.0, preferably 7.0, more preferably 8.0.

[4] The tire of any one of [1] to [3] above, wherein the content $A_{SIL}$, in parts by mass, of the silica is greater than 50 parts by mass and less than 200 parts by mass, preferably greater than 60 parts by mass and less than 200 parts by mass, more preferably greater than 70 parts by mass and less than 180 parts by mass, further preferably greater than 75 parts by mass and less than 150 parts by mass, further preferably greater than 80 parts by mass and less than 120 parts by mass.

[5] The tire of any one of [1] to [4] above, wherein the rubber composition comprises carbon black, and wherein $A_{CB}$ is greater than 1 part by mass and less than 40 parts by mass, preferably greater than 2 parts by mass and 35 parts by mass or less, more preferably greater than 3 parts by mass and less than 20 parts by mass, further preferably 5 parts by mass or more and less than 15 parts by mass, further preferably 5 parts by mass or more and 10 parts by mass or less, where $A_{CB}$ represents a content, in parts by mass, of the carbon black based on 100 parts by mass of the rubber component.

[6] The tire of any one of [1] to [5] above, wherein the rubber composition comprises carbon black, and wherein the content $A_{SIL}$, in parts by mass, of the silica and $A_{CB}$ satisfy the following relationship, and the right side of the inequality (3) is preferably 0.70, more preferably 0.65, further preferably 0.50, further preferably 0.30, further preferably 0.15,

$$(3)\ A_{CB}/A_{SIL} < 0.80$$

where $A_{CB}$ represents a content, in parts by mass, of the carbon black based on 100 parts by mass of the rubber component.

[7] The tire of any one of [1] to [6] above, wherein an average primary particle size of the silica is less than 25 nm, preferably less than 22 nm, more preferably less than 19 nm.

[8] The tire of any one of [1] to [7] above, wherein the content $A_{SIL}$, in parts by mass, of the silica and L satisfy the following relationship, where the right side of the inequality (4) is preferably 3000, more preferably 3500, further preferably 4000, further preferably 5000,

$$(4)\ A_{SIL} \times L > 2500$$

where L represents a land ratio, in %, of a tread ground-contacting surface of the tread.

[9] The tire of any one of [1] to [8] above, wherein H and S satisfy the following relationship, where the right side of the inequality (5) is preferably 220, more preferably 200, further preferably 180, further preferably 170,

$$(5)\ H \times S < 230$$

where H represents a thickness, in mm, of a rubber layer composed of the rubber composition constituting the tread and S represents a total styrene amount, in % by mass, in the rubber component.

[10] The tire of any one of [1] to [9] above, wherein the coupling agent comprises a coupling agent having a nitrogen atom-containing associative group.

[11] The tire of [10] above, wherein a content of the coupling agent having a nitrogen atom-containing associative group is greater than 6 parts by mass and less than 12 parts by mass, preferably greater than 7 parts by mass and less than 11 parts by mass, more preferably 8 parts by mass or more and less than 10 parts by mass, based on 100 parts by mass of the silica.

[12] The tire of any one of [1] to [11] above, wherein Wt and Dt satisfy one of the following inequalities (A), (B), and (C),

$$Wt < 225 \text{ and } Dt \geq 59.078 \times Wt^{0.460} \cdots (A)$$

$$225 \leq Wt < 235 \text{ and } Dt \geq 59.078 \times Wt^{0.620} - 967.673 \cdots (B)$$

$$235 \leq Wt \text{ and } Dt \geq Wt^{0.6} + 750 \cdots (C)$$

where Wt represents a tire cross-sectional width in mm and Dt represents a tire outer diameter in mm when the tire is assembled to a rim and internal pressure is set to be 250 kPa or more.

[13] The tire of any one of [1] to [12] above, wherein the tire comprises at least one lateral groove extending from a circumferential groove in a tire width direction and remaining in a land part.

REFERENCE SIGNS LIST

| | |
|---|---|
| 1 | Tire |
| 2 | Tread |
| 3 | Circumferential groove |
| 4 | Lateral groove |
| D | Groove depth |
| H | Thickness of rubber layer |
| EP | Tire equatorial plane |
| Wt | Tire cross-sectional width |
| Dt | Tire outer diameter |
| Ht | Tire cross-sectional height |
| TW | Tread ground-contacting width |

## Claims

**1.** A tire comprising a tread,

wherein a rubber composition constituting the tread comprises

a rubber component comprising an isoprene-based rubber and a styrene-butadiene rubber,
silica, and
a coupling agent,

wherein a tread surface of the tread comprises circumferential grooves extending continuously in a circumferential direction, and
wherein $A_{IR}$, $A_{SBR}$, $A_{SIL}$, and D satisfy the following relationships,

$$(1)\ A_{SIL}/A_{SBR} > 1.00$$

$$(2)\ A_{IR}/D > 3.0$$

where $A_{IR}$ represents a content, in parts by mass, of the isoprene-based rubber, $A_{SBR}$ represents a content, in parts by mass, of the styrene-butadiene rubber, $A_{SIL}$ represents a content, in parts by mass, of the silica, based on 100 parts by mass of the rubber component, and D represents a groove depth, in mm, of a deepest circumferential groove
among the circumferential grooves.

**2.** The tire of claim 1, wherein the right side of the inequality (1) is 1.50.

**3.** The tire of claim 1 or 2, wherein the right side of the inequality (2) is 6.0.

**4.** The tire of any one of claims 1 to 3, wherein the content $A_{SIL}$, in parts by mass, of the silica is greater than 50 parts by mass and less than 200 parts by mass.

**5.** The tire of any one of claims 1 to 4,

wherein the rubber composition comprises carbon black, and
wherein $A_{CB}$ is greater than 1 part by mass and less than 40 parts by mass, where $A_{CB}$ represents a content, in parts by mass, of the carbon black based on 100 parts by mass of the rubber component.

**6.** The tire of any one of claims 1 to 5,

wherein the rubber composition comprises carbon black, and

wherein the content $A_{SIL}$, in parts by mass, of the silica and $A_{CB}$ satisfy the following relationship,

$$(3)\ A_{CB}/A_{SIL} < 0.80$$

where $A_{CB}$ represents a content, in parts by mass, of the carbon black based on 100 parts by mass of the rubber component.

**7.** The tire of any one of claims 1 to 6, wherein an average primary particle size of the silica is less than 19 nm.

**8.** The tire of any one of claims 1 to 7, wherein the content $A_{SIL}$, in parts by mass, of the silica and L satisfy the following relationship,

$$(4)\ A_{SIL} \times L > 2500$$

where L represents a land ratio, in %, of a tread ground-contacting surface of the tread.

**9.** The tire of any one of claims 1 to 8, wherein H and S satisfy the following relationship,

$$(5)\ H \times S < 230$$

where H represents a thickness, in mm, of a rubber layer composed of the rubber composition constituting the tread and S represents a total styrene amount, in % by mass, in the rubber component.

**10.** The tire of any one of claims 1 to 9, wherein the coupling agent comprises a coupling agent having a nitrogen atom-containing associative group.

**11.** The tire of claim 10, wherein a content of the coupling agent having a nitrogen atom-containing associative group is greater than 6 parts by mass and less than 12 parts by mass based on 100 parts by mass of the silica.

**12.** The tire of any one of claims 1 to 11,

wherein Wt and Dt satisfy one of the following inequalities (A), (B), and (C),

$$Wt < 225 \text{ and } Dt \geq 59.078 \times Wt^{0.460} \cdots (A)$$

$$225 \leq Wt < 235 \text{ and } Dt \geq 59.078 \times Wt^{0.620} - 967.673 \cdots (B)$$

$$235 \leq Wt \text{ and } Dt \geq Wt^{0.6} + 750 \cdots (C)$$

where Wt represents a tire cross-sectional width in mm and Dt represents a tire outer diameter in mm when the tire is assembled to a rim and internal pressure is set to be 250 kPa or more.

**13.** The tire of any one of claims 1 to 12, wherein the tire comprises at least one lateral groove extending from a circumferential groove in a tire width direction and remaining in a land part.

FIG. 1

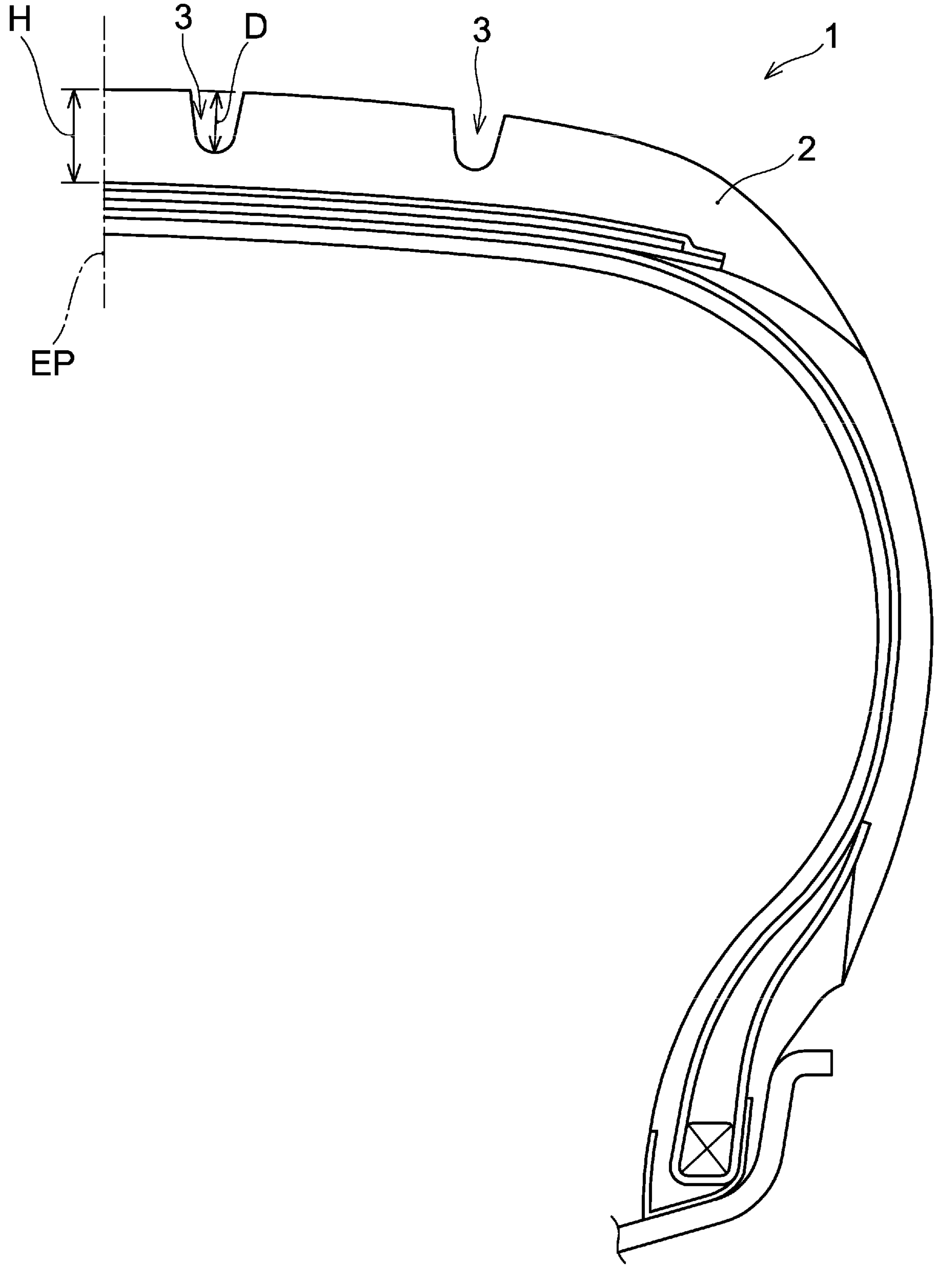

FIG. 2

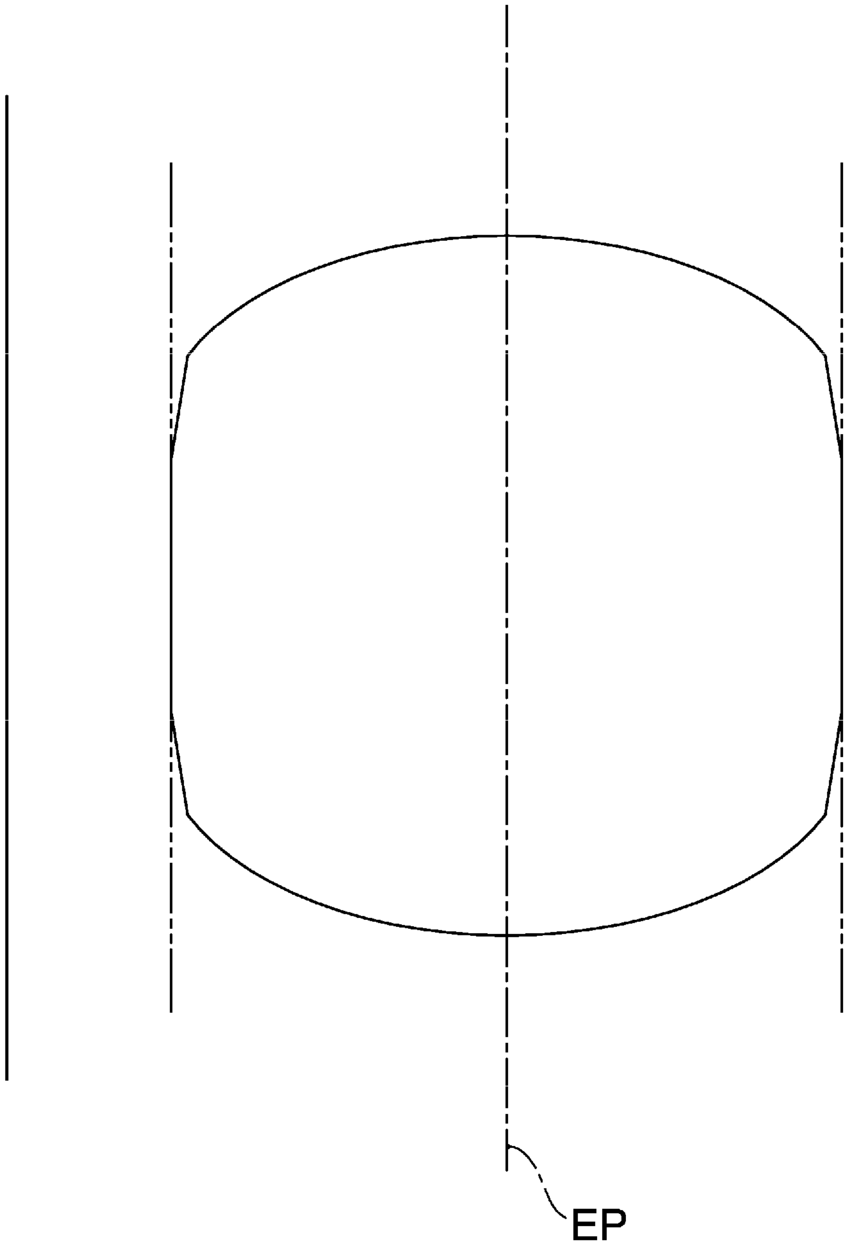

FIG. 3

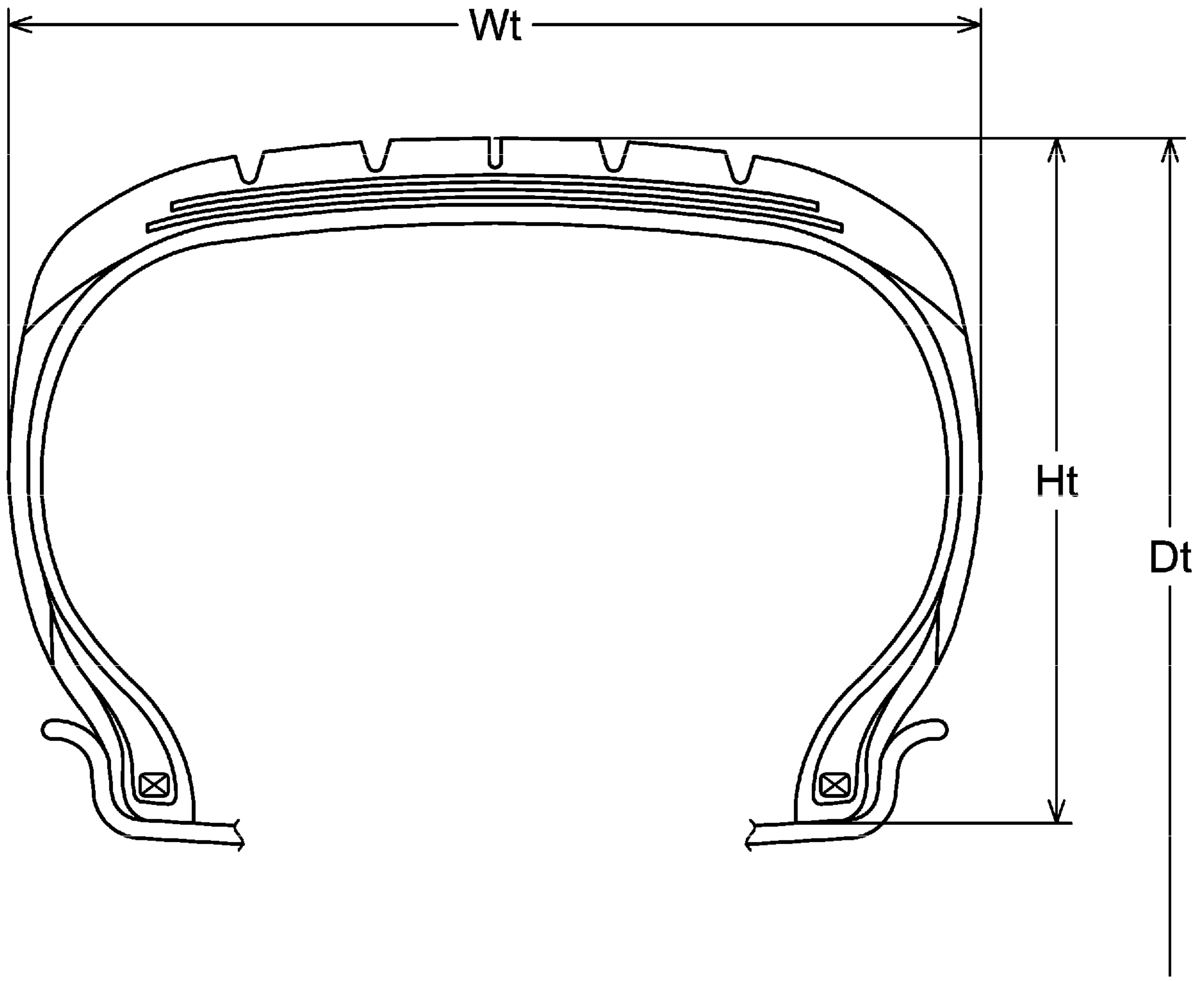

FIG. 4

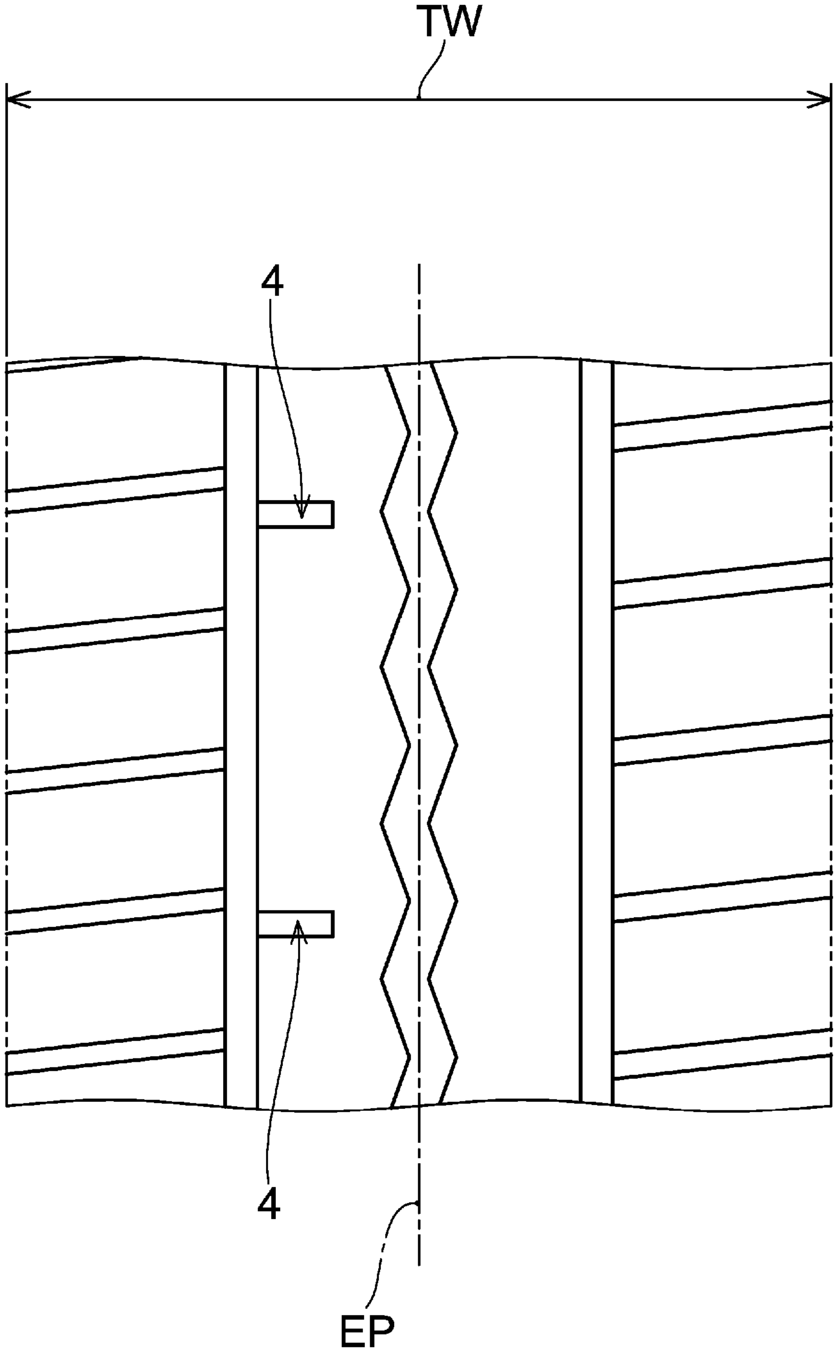

Europäisches Patentamt
European Patent Office
Office européen des brevets

# EUROPEAN SEARCH REPORT

Application Number
EP 24 21 1539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/039437 A1 (OKA MIYUKI [JP]) 11 February 2021 (2021-02-11) * examples 6, 15 * | 1-6,13 | INV. B60C1/00 C08L7/00 C08L9/06 |
| X | US 2021/395499 A1 (KAWACHI TAKAHIRO [JP]) 23 December 2021 (2021-12-23) * example A11; table 1 * * paragraph [0159] * | 1,3-7, 9-11,13 | |
| E | EP 4 523 926 A1 (SUMITOMO RUBBER IND [JP]) 19 March 2025 (2025-03-19) * example 6; table 1 * * paragraph [0136] * * figures 1-2 * | 1-9,12, 13 | |

TECHNICAL FIELDS SEARCHED (IPC)
B60C
C08L

The present search report has been drawn up for all claims

| Place of search | Date of completion of the search | Examiner |
|---|---|---|
| Munich | 9 April 2025 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 21 1539

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2025

| Patent document cited in search report | Publication date | Patent family member(s) | Publication date |
|---|---|---|---|
| US 2021039437 A1 | 11-02-2021 | CN 111655510 A | 11-09-2020 |
| | | DE 112019000668 T5 | 05-11-2020 |
| | | JP 6624216 B2 | 25-12-2019 |
| | | JP 2019135117 A | 15-08-2019 |
| | | US 2021039437 A1 | 11-02-2021 |
| | | WO 2019151521 A1 | 08-08-2019 |
| US 2021395499 A1 | 23-12-2021 | EP 3925793 A1 | 22-12-2021 |
| | | JP 7472670 B2 | 23-04-2024 |
| | | JP 2021195071 A | 27-12-2021 |
| | | US 2021395499 A1 | 23-12-2021 |
| EP 4523926 A1 | 19-03-2025 | EP 4523926 A1 | 19-03-2025 |
| | | JP 2025041359 A | 26-03-2025 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013053296 A
- JP 2009002594 A
- EP 3427975 A
- JP 6856781 B
- EP 3173251 A
- WO 2019193286 A


### Non-patent literature cited in the description


- *Akita Prefectural University Web Journal B*, 2019, vol. 6, 216-222
- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193